Europäisches Patentamt

European Patent Office

Office européen des brevets

(19)

(11) Numéro de publication: **0 237 403**
**A1**

(12) # DEMANDE DE BREVET EUROPEEN

(21) Numéro de dépôt: 87400425.2

(22) Date de dépôt: 26.02.87

(51) Int. Cl.⁴: **A 23 L 2/38**
A 23 L 2/40, A 23 P 1/02

(30) Priorité: 27.02.86 FR 8602749

(43) Date de publication de la demande:
16.09.87 Bulletin 87/38

(84) Etats contractants désignés:
AT BE CH DE ES FR GB GR IT LI LU NL SE

(71) Demandeur: SANOFI, société anonyme
40, Avenue George V
F-75008 Paris (FR)

(72) Inventeur: Abramovici, Bernard
Résidence de Juvignac Villa 35 La Plaine
F-34990 Juvignac (FR)

Lheritier, Jean
Résidence des Béguines Bat. A-Avenue des Moulins
F-34100 Montpellier (FR)

Blanc, Francis
Décédé (FR)

(74) Mandataire: Combe, André et al
CABINET BEAU DE LOMENIE 55, rue d'Amsterdam
F-75008 Paris (FR)

(54) **Compositions pour la fabrication de formes unitaires pour boissons instantanées, et procédé de préparation desdites formes unitaires.**

(57) La présente invention concerne une composition pour la reconstitution d'une boisson par dissolution rapide dans l'eau, caractérisée en ce qu'elle contient un sucre pour compression directe et de la L-leucine comme lubrifiant. Cette composition convient pour la préparation de boissons instantanées.

EP 0 237 403 A1

Bundesdruckerei Berlin

## Description

Compositions pour la fabrication de formes unitaires pour boissons instantanées, et procédé de préparation desdites formes unitaires.

La présente invention a pour objet des compositions pour la fabrication de formes unitaires pour boissons instantanées et un procédé de préparation desdites formes unitaires.

Depuis quelques années, un intérêt certain s'est manifesté pour la préparation de formes unitaires telles que tablettes, cubes et similaires, destinées à reconstituer une boisson par dissolution instantanée dans l'eau.

C'est ainsi qu'on a vu apparaître diverses formulations pour la préparation de café et de thé "instantanés", puis l'intérêt s'est étendu à l'obtention de boissons aromatisées de diverses façons.

En ce qui concerne la préparation de telles formes unitaires, différents procédés ont été utilisés.

Le brevet US 4 031 238 décrit un procédé par chauffage des constituants pulvérisés à 95° F, à savoir 35°C, pour solidifier le mélange. Celui-ci est alors découpé en formes unitaires de taille et de forme désirées.

Le brevet US 4 384 005 décrit un procédé à partir d'un mélange humide des constituants qui est d'abord granulé puis comprimé pour former une tablette contenant 1,5% d'humidité qui est ensuite séchée. Ce dernier brevet fait le point de l'état de la technique dans le domaine.

Le brevet US 4 508 740 décrit une granulation humide des constituants du mélange puis compression des granulés.

On a maintenant trouvé qu'une composition à base d'un sucre pour compression directe et d'un lubrifiant : la L-leucine, peut être comprimée directement par voie sèche.

Les sucres pour compression directe sont ceux qui présentent une granulométrie comprise entre 100 et 400 microns et pour lesquels le temps d'écoulement, mesurant l'écoulement de 100 g de produit à travers un entonnoir NF B 35032, est inférieur ou égal à 10 secondes.

La présente invention a donc pour objet une telle composition.

La présente invention a également pour objet un procédé de préparation de formes unitaires destinées à la reconstitution d'une boisson instantanée, qui utilise la compression directe par voie sèche des divers constituants. Un tel procédé possède divers avantages par rapport aux procédés existants.

En évitant tout chauffage, il évite toute altération, même mineure, des constituants qui pourrait entraîner des modifications du goût de la boisson après dissolution.

Il permet d'obtenir des comprimés exempts d'humidité, ce qui améliore la stabilité et donc la conservation des formes unitaires ainsi préparées.

Il conduit à un processus industriel extrêmement simplifié et permet une production à cadence très élevée.

Ce procédé est donc économique par rapport aux procédés existants. Pour atteindre le but fixé, à savoir la compression directe sèche des divers constituants du mélange, celui-ci doit répondre à certaines exigences.

Selon la présente invention, la composition du mélange à comprimer est la suivante, exprimée en pourcentage du poids du comprimé :

Sucre pour compression directe 40 à 89%
Lubrifiant 0,5 à 10%
de préférence :
Sucre pour compression directe 50 à 79%
Lubrifiant 3 à 10%
A ce mélange de base, on peut ajouter :
- des aromatisants
- des édulcorants
- des acides organiques
- des colorants
- des désintégrants
- des produits pour rendre la boisson effervescente biologiquement compatibles, dont l'ensemble représente de 1 à 59,5% en poids.

Comme sucre à compression directe, on utilise de préférence le lactose sous une forme permettant la compression directe telle que le lactose microcristallin extra-fin. On peut également utiliser le fructose.

En tant que lubrifiant, on doit utiliser une substance ne modifiant pas le goût de la boisson reconstituée. Le lubrifiant préféré est la L-leucine qui a en outre l'avantage d'être soluble dans l'eau. On peut aussi utiliser du stéarate de magnésium ou de la silice, éventuellement adjoint à la L-leucine, tout en respectant les proportions pondérales données ci-dessus pour le lubrifiant.

Les aromatisants qui sont des arômes naturels ou synthétiques représentent de 0,5 à 20% du poids des comprimés. Ces aromatisants peuvent être des arômes d'agrumes (orange, citron, pamplemousse), des arômes de fruits rouges (cerise par exemple), des arômes de fruits exotiques ou encore des arômes caramel ou café. L'aromatisant peut être absent si l'on veut préparer seulement une boisson à goût sucré hypocalorique.

Les édulcorants qui sont choisis parmi les produits naturels ou synthétiques comprennent notamment le glucose, le fructose, le mannitol, le cyclamate, la saccharine, les édulcorants peptidiques, tels que l'aspartam ou encore des sucres acariogènes, tels que le xylitol ou le maltitol. Suivant leur nature, ils représentent de 0 à 10% du poids du comprimé.

Les acides organiques sont choisis parmi l'acide citrique, l'acide tartrique, l'acide malique, l'acide fumarique ou l'acide ascorbique. Ils sont présents en quantité variant de 0 à 13% en poids et peuvent participer à l'aromatisation.

Les colorants qui représentent 0 à 1,5% en poids peuvent être choisis parmi les colorants à usage alimentaire et notamment le jaune orangé S, le jaune de quinoléine, la tartrazine, l'érythrosine.

Enfin, les agents désintégrants qui permettent d'obtenir une dissolution rapide du comprimé peuvent être choisis notamment parmi les carboxyméthylamidons, les carboxyméthylcelluloses ou la polyvinylpyrrolidone. Ils représentent de O à 5% du poids du comprimé.

Eventuellement, on peut encore ajouter, en faible quantité, aux précédents constituants du mélange, un agent conférant un aspect trouble à la boisson, tel que par exemple de la cellulose ou du phosphate tricalcique.

Les mélanges préférés comportent, outre le sucre pour compression directe et la L-leucine, au moins un édulcorant, un acide organique, un colorant ou un désintégrant.

Le procédé selon l'invention permet également de préparer des comprimés pour boissons effervescentes. Pour ce faire, il suffit d'ajouter aux constituants précédents un couple effervescent acide-sel, connu en soi. Mais dans la mesure où le mélange peut déjà contenir des acides, il suffit d'ajouter aux constituants précédents un sel alcalin générateur de gaz carbonique, tel que le bicarbonate de sodium, le carbonate de sodium, le carbonate de glycine sodium et similaires.

La quantité de sel alcalin utilisée peut varier entre une quantité équimoléculaire à celle de l'acide organique utilisée et environ la moitié de celle-ci. En général, pour parfaire l'aromatisation, on utilisera un excès d'acide par rapport à l'agent alcalin.

Dans le cas des comprimés effervescents, la vitesse de dissolution est augmentée et il est alors inutile d'ajouter un agent désintégrant.

A partir des constituants ainsi définis, le procédé de préparation des comprimés est aisé. Il suffit de mélanger intimement les composants puis de tamiser le mélange ainsi obtenu, mélanger à nouveau et procéder à la compression sur une machine à comprimer en utilisant des poinçons convenables pour obtenir un comprimé de poids tel qu'il puisse fournir directement par simple dissolution dans environ 15O ml d'eau un verre de boisson prête à l'emploi.

Le procédé selon l'invention ne nécessite aucun matériel spécifique. On peut utiliser indifféremment les différents types d'appareils existants pour mélanger les poudres, tamiser et effectuer la compression.

Les exemples suivants non limitatifs sont destinés à illustrer l'invention.

EXEMPLE 1 : Comprimés pour boisson à l'orange

Dans un mélangeur planétaire, on introduit :
Lactose microcistallin extrafin 3,28O kg
Aspartam O,O32 kg
Carboxyméthylamidon sodique O,165 kg
Acide citrique O,45O kg
Arôme naturel orange en poudre O,857 kg
Colorant organique orange n⁰ 5OO (MERO) O,OO2 kg
L-leucine O,4O4 kg

On mélange pendant 1O minutes, puis on tamise le mélange sur tamis de O,315 mm d'ouverture de maille. On mélange à nouveau dans le mélangeur pendant 5 minutes.

On procède à la compression sur machine à comprimer alternative Frogerais 1B équipée de poinçons plats rectangulaires de 26,7 mm de longueur et 17,7 mm de largeur. Le réglage de l'excentrique à la position 8 permet d'obtenir des comprimés d'épaisseur 9,3 mm environ pesant environ 5,19 g. Ces comprimés présentent une résistance à la rupture mesurée sur un duromètre Schleuniger de 3 à 4 kgf (comprimés pris dans le sens de la longueur)

Par dissolution dans environ 15O ml d'eau, un comprimé permet de reconstituer 1 verre de boisson à l'orange. La dissolution totale est obtenue en 3O à 6O secondes.

EXEMPLE 2 : Comprimés pour boisson effervescente Au pamplemousse

Toute l'opération est effectuée dans un local équipé en atmosphère déshydratée (environ 2O% d'humidité relative). Dans un mélangeur de poudres, on introduit :
Lactose microcristallin extrafin 3,318 kg
Acide citrique O,5OO kg
Carbonate monosodique O,25O kg

Ces ingrédients ont été préalablement deshydratés dans une étuve à vide à 3O° C de façon à obtenir un taux d'humidité résiduelle inférieur à O,5%.

On ajoute ensuite :
Aspartam O,O3O kg
L-leucine O,4OO kg
Arôme pamplemousse poudre LC 8667 (MERO) O,7OO kg
Colorant jaune de quinoléine O,O2O kg

On mélange l'ensemble des poudres pendant 1O minutes et tamise le mélange sur tamis de O,315 mm d'ouverture de maille. On mélange à nouveau pendant 1O minutes puis on procède à la compression comme indiqué dans l'exemple 1.

On obtient ainsi des comprimés d'un poids de 5,2 g que l'on stocke en atmosphère déshydratée dans des récipients clos et en présence d'un agent déshydratant.

## Revendications

1. Composition pour la reconstitution d'une boisson par dissolution rapide dans l'eau, caractérisée en ce qu'elle contient un sucre pour compression directe et de la L-leucine comme lubrifiant.

2. Composition selon la revendication 1, contenant de 40 à 89 % en poids de sucre pour compression directe et de 0,5 à 10 % en poids de L-leucine auxquels on ajoute un ou plusieurs composés choisis parmi les constituants suivants : aromatisants, édulcorants, acides organiques, colorants, désintégrants, produits pour rendre la boisson effervescente pour compléter à 100 %.

3. Composition selon l'une des revendications 1 et 2, contenant de 50 à 79 % en poids de sucre pour compression directe et de 3 à 10 % en poids de L-leucine.

4. Composition selon l'une quelconque des revendications 1 à 3, dans laquelle le sucre pour compression directe est le lactose microcristallin.

5. Composition selon l'une quelconque des revendications 1 à 4, contenant de 0,5 à 20 % en poids d'un aromatisant.

6. Composition selon l'une quelconque des revendications 1 à 5, contenant de 0,1 à 2 % en poids d'un édulcorant de synthèse.

7. Composition selon l'une quelconque des revendications 1 à 5, contenant au moins un édulcorant, un acide organique, un colorant ou un désintégrant biologiquement compatible.

8. Utilisation d'une composition selon l'une quelconque des revendications 1 à 7 pour la préparation de comprimés par la voie sèche.

9. Procédé de préparation de comprimés pour reconstituer une boisson par dissolution rapide dans l'eau qui consiste à mélanger, sous forme de poudres, les constituants selon une des revendications 1 à 7, à tamiser le mélange puis à soumettre la poudre à une compression directe par voie sèche de façon à obtenir un comprimé.

10. Procédé selon la revendication 9, caractérisé en ce que le mélange des constituants contient de 40 à 89 % en poids de sucre pour compression directe et de 0,5 à 10 % en poids de L-leucine auxquels on peut ajouter un ou des aromatisants ou un des édulcorants, un ou des colorants, un ou des acides organiques et éventuellement des désintégrants ou des produits pour rendre la boisson effervescente.

11. Procédé selon la revendication 10, dans laquelle le sucre pour compression directe est choisi parmi le lactose ou le fructose et le lubrifiant est L-leucine.

12. Comprimé pour la reconstitution d'une boisson par dissolution rapide dans l'eau préparé par le procédé selon l'une des revendications 9 à 11.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 034 911 (I.K. McKEE et al.) <br> * Colonne 4, lignes 1-14 * | 1,2,4, 8,9,12 | A 23 L 2/38 <br> A 23 L 2/40 <br> A 23 P 1/02 |
| | --- | | |
| A | CH-A- 428 410 (CHUGAI SEIYAKU) <br> * Colonne 1, ligne 35 - colonne 2, ligne 2; examples 1,2 * | 1,6 | |
| | --- | | |
| A | GB-A-1 178 294 (MILES LABORATORIES) | | |
| | --- | | |
| A | DE-A-2 020 982 (SUCREST) | | |
| | --- | | |
| A | CH-A- 467 625 (CHUGAI SEIYAKU) | | **DOMAINES TECHNIQUES RECHERCHES (Int. Cl.4)** |
| | --- | | |
| A | US-A-3 584 114 (A. CAVALLI et al.) | | A 23 L <br> A 23 P <br> C 13 F |
| | --- | | |
| A | COMMITTEE ON CODEX SPECIFICATIONS: "Food chemicals codex", 3ème édition, 1981, National Academy Press, Washington, DC, US <br> * Page 171, colonne 2, dernier alinéa * | 1 | |
| | ---           -/- | | |

Le présent rapport de recherche a été établi pour toutes les revendications

| Lieu de la recherche | Date d'achèvement de la recherche | Examinateur |
|---|---|---|
| LA HAYE | 25-05-1987 | WIESER, M.R.J. |

# Office européen des brevets

# RAPPORT DE RECHERCHE EUROPEENNE

EP  87 40 0425

| DOCUMENTS CONSIDERES COMME PERTINENTS | | | Page  2 |
|---|---|---|---|
| Catégorie | Citation du document avec indication, en cas de besoin, des parties pertinentes | Revendication concernée | CLASSEMENT DE LA DEMANDE (Int. Cl.4) |
| P,X | WO-A-8 603 380  (BOEHRINGER) <br> * Revendications 1,4,7,12 * <br><br> ----- | 1,9,12 | |
| | | | DOMAINES TECHNIQUES RECHERCHES (Int. Cl.4) |

Le présent rapport de recherche a été établi pour toutes les revendications

| Lieu de la recherche | Date d'achèvement de la recherche | Examinateur |
|---|---|---|
| LA HAYE | 25-05-1987 | WIESER, M.R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82